# EUROPEAN PATENT APPLICATION

(11) **EP 1 669 240 A1**
(43) Date of publication of application: **14.06.2006**
(21) Application number: 05022345.2
(22) Date of filing: 13.10.2005
(51) Int. Cl.: B60N 2/427, B60R 21/20

(54) **Passenger-protecting apparatus**

(30) Priority: 08.12.2004 JP 2004355581; 28.01.2005 JP 2005021611
(71) Applicant: TAKATA CORPORATION, Minato-ku, Tokyo 106-8510 (JP)
(72) Inventor: Yoshigawa, Hiromichi, Tokyo 106-8510 (JP); Kumagai, Masayoshi, Tokyo 106-8510 (JP)
(74) Representative: Vossius & Partner

(57) **Abstract**

In a passenger-protecting apparatus with which poor seat-sitting comfortability is prevented and in which a fixing work, a maintenance work, and the like are performed with good workability. A seat cushion is supported from below by a supporting member including a seat pan 4 and springs 6, and the supporting member has a passenger-protecting apparatus 10 disposed under the front part thereof. Upon detection of a frontal car collision, an inflator discharges gas, so that the gas from the inflator inflates a bag 12. The inflated bag 12 pushes the front part of the supporting member upwards. As a result, the front part of the seat cushion has a higher density because of being pushed up or pressed from below via the seat pan 4 and the springs 6, thereby preventing or inhibiting the waist of a passenger from moving forwards.

## Description

The present invention relates to a passenger-protecting apparatus for protecting a passenger against a collision, sitting in a seat of a vehicle such as an automobile, and more specifically, it relates to a passenger-protecting apparatus formed such that the waist of a passenger is constrained upon a frontal collision so as to prevent the body of the passenger from moving forwards and downwards.

As a protecting system for protecting a passenger in an automobile against a collision, in order to prevent a submarine phenomenon, under which, upon a frontal collision, the passenger is likely to move through under a lap belt even when wearing the seat belt, Japanese Unexamined Patent Application JP-A-10-217818 discloses a passenger-protecting apparatus having a structure in which an inflatable bag is disposed between a seat cushion and a seat pan and, and upon a car collision, the front part of the seat cushion is pushed up by inflating the bag.

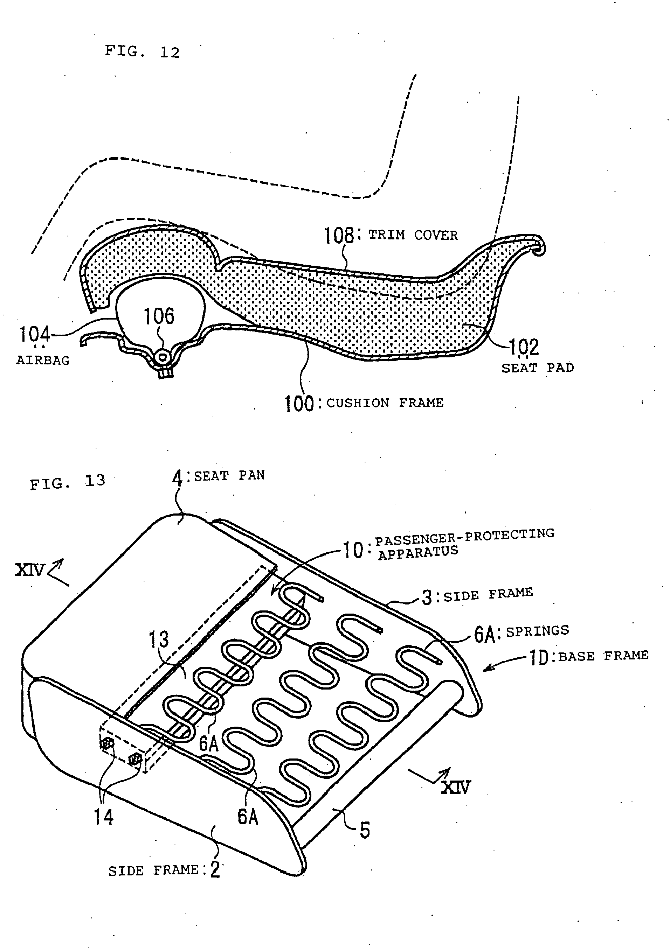

Fig. 12 is a longitudinal sectional view of the passenger-protecting apparatus disclosed in the known document, in the front-back direction of a seat. A seat has an airbag 104 at the front part thereof, interposed between a cushion frame (a seat pan) 100 and a seat pad (a seat cushion) 102. The airbag 104 extends in the left-right width direction of the seat and is inflatable with an inflator 106. The upper surface of the seat pad is covered by a trim cover 108, in which a passenger sits.

When the inflator 106 is operated upon a car collision, since the airbag 104 is inflated, the front part of the seat pad 102 is pushed up or prodded up and hence the density thereof increases, thereby preventing (including inhibiting) the body of the passenger form moving forwards.

In the passenger-protecting apparatus disclosed in the foregoing Japanese Unexamined Patent Application JP-A-10-217818, since the bag, and the inflator, and so forth are disposed on the seat pan, the seat pan has irregularities generated on the upper surface thereof, and a seat-occupying person feels the irregularities via the seat cushion, thereby possibly making the seat uncomfortable to sit.

Also, when the bag, the inflator, and so forth are fixed or maintained, the seat cushion must be removed from the upper side of the seat pan, thereby causing poor workability.

The present invention has an object to provide a passenger-protecting apparatus with which poor seat-sitting comfortability is prevented and in which a fixing work, a maintenance work, and the like can be performed with good workability.
This object is achieved with the features of the claims.

A passenger-protecting apparatus according to the present invention (stated in Claim 1) includes a bag which is disposed under the front part of a supporting member supporting a seat cushion and which is inflatable so as to push up the supporting member from below; and an inflator inflating the bag at the time of a car emergency. When the front part of the supporting member is pushed up by the inflated bag, the front part of the seat cushion is pressed from below.

In the passenger-protecting apparatus stated in Claim 2, the supporting member is a seat pan and seat springs, and when the bag is inflated, the seat pan and the seat springs are pushed upwards.

In the passenger-protecting apparatus stated in Claim 3, the supporting member is seat springs connected to a seat pan and extending in the front-back direction. When the bag is inflated, the connection between the front ends of the seat springs and the seat pan is released and the front parts of the seat springs are pushed upwards.

In the passenger-protecting apparatus stated in Claim 4, the supporting member is seat springs extending in the left-right direction and having both ends thereof connected to the frame sections of a seat. When the bag is inflated, the connection between both ends of the seat springs and the frame sections is released and the seat springs are pushed upwards.

In the passenger-protecting apparatus stated in Claim 5, the supporting member is a seat pan, and when the bag is inflated, the seat pan is pushed upward while being deformed.

In the passenger-protecting apparatus stated in Claim 6, the seat pan has deformation-accelerating means provided therein for accelerating the upward deformation thereof.

In the passenger-protecting apparatus stated in Claim 7, the deformation-accelerating means is a slit disposed along the periphery of a predetermined deformation area of the seat pan.

In the passenger-protecting apparatus stated in Claim 8, the deformation-accelerating means is a pleat-shaped portion disposed along the periphery of the predetermined deformation area of the seat pan.

In the passenger-protecting apparatus stated in Claim 9, the supporting member is a seat pan, and the seat pan has an opening perforated therein above the bag, for allowing the inflated bag to pass upwards therethrough, and a plate disposed thereon so as to cover the opening. When the bag is inflated, the plate is pushed upwards.

In each of the passenger-protecting apparatuses according to the present invention, when bag is inflated, the supporting member is pushed up by the bag. With this, the front part of the seat cushion is pressed from below. As a result, the front part of the seat cushion has a higher density because of being pushed up or pressed from below, thereby preventing or inhibiting the waist of a passenger from moving forwards.

In each of the passenger-protecting apparatuses according to the present invention, since the bag is disposed under the supporting member of the seat cushion, a seat-occupying person does not feel a foreign-body sensation and hence sits in a seat comfortably.

Also, on the occasion of fixing or maintaining the bag, its work can be conducted without removing the seat cushion from above of the supporting member, thereby resulting in very satisfactory workability.

In the passenger-protecting apparatus stated in Claim 2, when the bag is inflated, the seat pan and the seat springs are pushed upwards. Because of having a smaller stiffness than the seat pan in general, the seat springs are quickly pushed upwards when pushed by the bag from below. Also, since the seat pan is also pushed up, a state of the seat cushion being pushed from below continues even after inflation of the bag.

In the passenger-protecting apparatus stated in Claim 3, since the front ends of the seat springs are disengaged from the seat pan and pushed upward when the bag is inflated, this upward pushing is very quickly achieved. Also, even when an upward pressing force of the bag is relatively small, the seat cushion is sufficiently pressed from below.

In the passenger-protecting apparatus stated in Claim 4 too, since both ends of the seat springs are disengaged from the frame portions of the seat and pushed upwards when the bag is inflated, this upward pushing is achieved very quickly. Also, even when an upward pressing force of the bag is relatively small, the seat cushion is sufficiently pressed from below.

In the passenger-protecting apparatus stated in Claim 5, since the seat pan supporting the seat cushion is pushed and deformed by the bag, a state of the seat cushion being pushed from below continues even after inflation of the bag.

In the passenger-protecting apparatus stated in Claim 6, since an upward deformation of the seat pan is accelerated upon inflation of the bag, the front part of the seat cushion is quickly pushed upwards or made hard.

In the passenger-protecting apparatuses stated in Claims 7 and 8, the deformation-accelerating means can be easily formed in the seat pan.

Meanwhile, by selecting the structure including the shape, the size, and the arrangement of the slit or the pleat-shaped portion where appropriate, for example, the bulging shape, the bulging direction, and the bulging height of the predetermined deformation area from the upper, surface of the seat pan when pushed up by the bag can be controlled.

In the passenger-protecting apparatus stated in Claim 9, since the plate is pushed up when the bag is inflated, the area above the plate, of the front part of the seat cushion is relatively evenly pushed up or made hard.

Also, since the bag is inflated upwards while passing through the opening, the upward movement of the plate is quickly achieved, and even when the bag has a low inflation pressure, the front part of the seat cushion is sufficiently pressed.

Embodiments of the present invention will be described with reference to the attached drawings.
Fig. 1 is a perspective view of a base frame of a seat including a passenger-protecting apparatus according to an embodiment.
Fig. 2 is a perspective view of the passenger-protecting apparatus shown in Fig. 1, in an inflation state of a bag.
Fig. 3 illustrates sectional views taken along line IIIA-IIIA indicated in Fig. 1 and IIIB-IIIB line indicated in Fig. 2.
Fig. 4 is a sectional view of the base frame of a seat including the passenger-protecting apparatus, according to another embodiment.
Fig. 5 is a perspective view of a base frame of a seat including the passenger-protecting apparatus, according to another embodiment.
Fig. 6 is a perspective view of the base frame shown in Fig. 5, in the inflation state of the bag.
Fig. 7 illustrates sectional views taken along line VIIA-VIIA indicated in Fig. 5 and line VIIB-VIIB indicated in Fig. 6.
Fig. 8 is a perspective view of a base frame of a seat including the passenger-protecting apparatus, according to another embodiment.
Fig. 9 is a perspective view of the base frame shown in Fig. 8, in the inflation state of the bag.
Fig. 10 is an exploded perspective view of a base frame of a seat including the passenger-protecting apparatus, according to another embodiment.
Fig. 11 illustrates sectional views of the base frame shown in Fig. 10, respectively, in the inflation and non-inflation states of the bag.
Fig. 12 is a sectional view of a known example.
Fig. 13 is a perspective view of a base frame of a seat including the passenger-protecting apparatus, according to another embodiment.
Fig. 14 illustrates sectional views of the base frame shown in Fig. 13, respectively, in the inflation and non-inflation states of the bag.
Fig. 15 is a perspective view of a base frame of a seat including the passenger-protecting apparatus, according to another embodiment.
Fig. 16 illustrates sectional views of the base frame shown in Fig. 15, respectively, in the inflation and non-inflation states of the bag.
Fig. 17 illustrates sectional views of another example structure of a pleat-shaped portion, respectively, in the inflation and non-inflation states of the bag.
Fig. 18 is a sectional view of another example structure of a pleat-shaped portion.

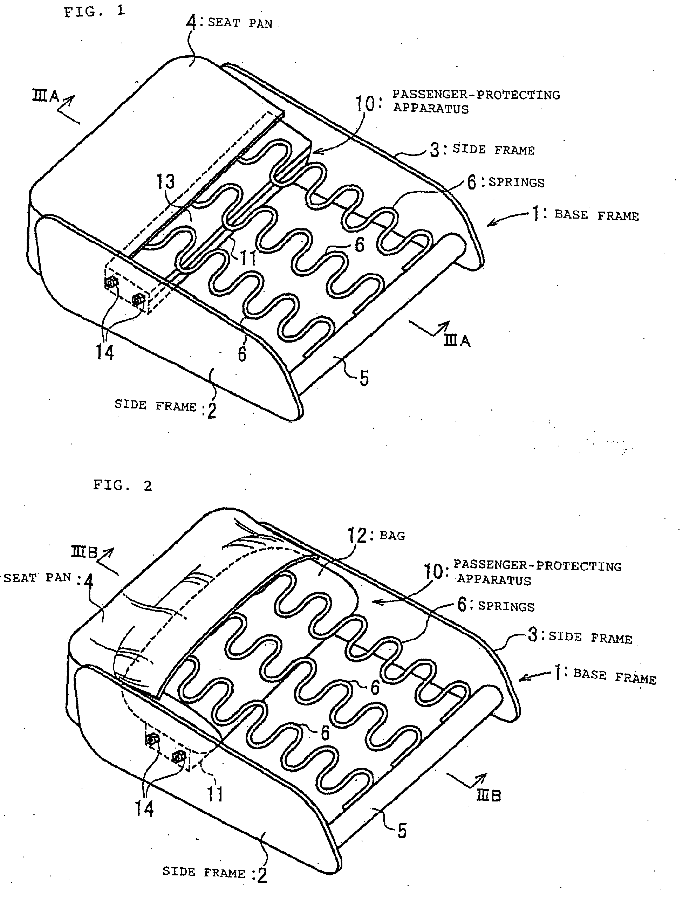

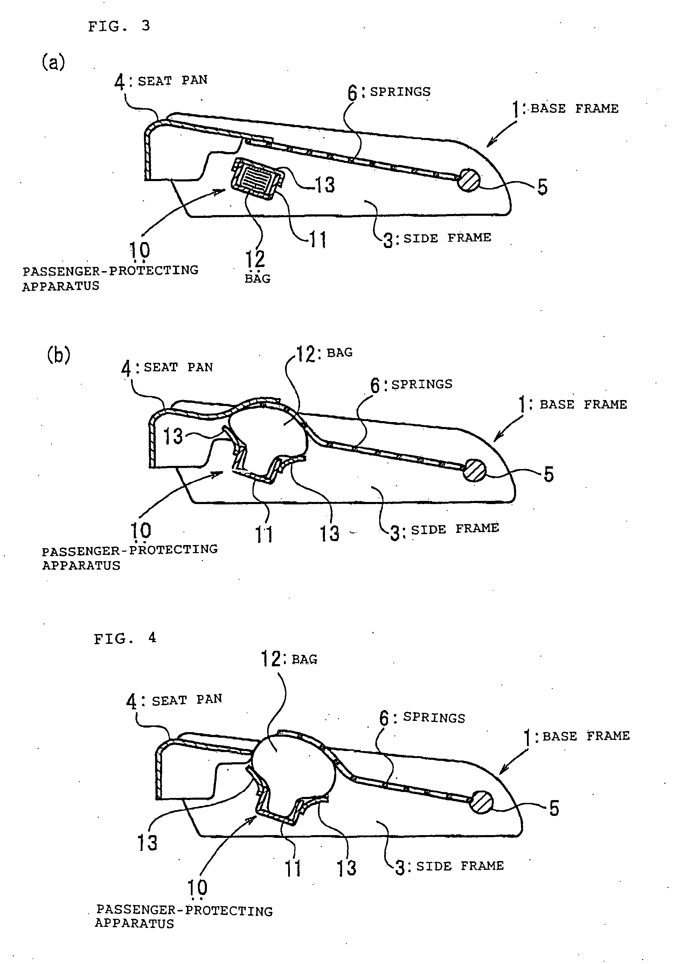

Figs. 1 and 2 are perspective views of a base frame section of a seat including a passenger-protecting apparatus according to an embodiment, and Figs. 3(a) and (b) are sectional views taken along line IIIA-IIIA indicated in Fig. 1 and line IIIB-IIIB indicated in Fig. 2, respectively. Meanwhile, Fig. 1 and Fig. 3(a) illustrate a non-inflation state of a bag, and Fig. 2 and Fig. 3(b) illustrate an inflation state of the bag. In the following descriptions, a front-back direction means the front-back direction of an automobile and a left-right direction means the horizontal direction of the automobile.

A frame constituting a seat of the automobile includes a base frame 1 and a back frame (not shown) rotatably connected to the rear part of the base frame 1 having a reclining device (not shown) interposed therebetween. The back frame has a headrest (not shown) fixed at the upper part thereof.

The base frame 1 includes a pair of side frames 2 and 3 extending in the front-back direction along both sides of the seat. The side frames 2 and 3 have a seat pan 4 disposed over the front ends thereof. The rear ends of the side frames 2 and 3 are connected to each other with a shaft 5.

In the present embodiment, the seat pan 4 extends relatively short in the front-back direction. The seat pan 4 and the shaft 5 have a plurality of seat springs (hereinafter, simply referred to springs) 6 stretched over therebetween in a large number of rows. Each spring 6 extends in the front-back direction while snaking its way from side to side like drawing a letter S and has one end connected to the rear end of the seat pan 4 and the other end connected to the shaft 5.

Although not shown, the base frame 1 and the back frame have a seat cushion and a seat bag placed thereon, composed of urethane or the like. The seat pan 4 and the springs 6 support the seat cushion from below. In other words, in the present embodiment, the seat pan 4 and the springs 6 constitute a supporting member of the seat cushion. The supporting member has a passenger-protecting apparatus 10 disposed under the front part thereof (a section extending from the seat pan 4 to the front ends of the springs 6).

The passenger-protecting apparatus 10 includes a container-shaped retainer 11 opened upwards, an inflatable bag 12 folded and accommodated in the retainer 11, an inflator (not shown) inflating the bag 12 at the time of a car emergency, and a lid 13 closing the opened part of the upper surface of the retainer 11.

The retainer 11 extends in the left-right direction and both ends thereof are connected to the left and right side frames 2 and 3 with fixtures 14 such as bolts and nuts. The bag 12 extends in the left-right direction inside of the retainer 11. Although not shown, the inflator is disposed within the bag 12 and fixed to the bottom of the retainer 11 via the lower part of the bag 12. When the bag 12 is inflated, the lid 13 is split when pushed by the bag 12. The inflated bag 12 bulges out upwards while pushing open the lid 13 so as to push up the section from below, extending from the seat pan 4 to the front ends of the springs 6.

Meanwhile, the passenger-protecting apparatus 10 is shipped to a seat manufacturing facility in a previously unitized state in a passenger-protecting apparatus manufacturing facility. Then, in the seat manufacturing facility, the passenger-protecting apparatus 10 is installed under the front part of the supporting member of the seat cushion (the seat pan 4 and the springs 6) from the side of the lower surface of the base frame 1 having the seat cushion already placed thereon.

Next, an operation of the passenger-protecting apparatus 10 will be described.

Upon detection of a frontal car collision, the inflator discharges gas, so that the gas from the inflator inflates the bag 12. As shown in Fig. 3(b), the inflated bag 12 pushes open the lid 13 and bulges out upwards so as to push upwards the section extending from the seat pan 4 to the front ends of the springs 6. As a result, the front part of the seat cushion has a higher density because of being pushed up or pressed from below via the seat pan 4 and the springs 6, thereby preventing or inhibiting the waist of a passenger from moving forwards.

Meanwhile, in the present embodiment, when pressed by the inflated bag 12 from below, the seat pan 4 is subjected to a plastic deformation like forming an upward convex curve, thereby pressing upwards the seat cushion. In a seat including the passenger-protecting apparatus 10, since the passenger-protecting apparatus 10 is disposed under the seat pan 4 and the springs 6 supporting the seat cushion, a seat-occupying person does not feel a foreign-body sensation and hence sits in the seat comfortably.

Also, on the occasion of, for example, fixing the passenger-protecting apparatus 10 to the seat or maintaining it, its work can be conducted from the lower surface of the base frame without removing the seat cushion from above of the seat pan 4 and the springs 6, thereby resulting in very satisfactory workability.

While the apparatus according to the present embodiment is constructed such that both the seat pan 4 and the springs 6 are pushed upwards by the inflated bag 12, the apparatus may be constructed as shown in Fig. 4, such that, when the springs 6 are pushed upwards by the bag 12, the connection between the front ends of the springs 6 and the seat pan 4 is released and only the springs 6 are pushed upwards. Meanwhile, Fig. 4 is a longitudinal sectional view of the base frame of the seat having the above-described structure in the inflation state of the bag.

As the structure in which the front ends of the springs 6 are disengaged from the seat pan 4 when the springs 6 are pressed upwards, while a structure in which each spring 6 has a downward L-shaped hook provided at the front end thereof such that the hook is hooked from above with a corresponding hole perforated in the seat pan 4 is illustrated by way of example, the structure is not limited to this.

With the above-described structure shown in Fig. 4, in comparison to the case where both the seat pan 4 and the springs 6 are pushed up by the bag 12, the inflated bag 12 suffices to have a low inner pressure. Therefore the inflator having a relatively low power can be adopted and the pressure strength of the bag 12 can be reduced. As a result, the structural cost of the apparatus can be reduced.

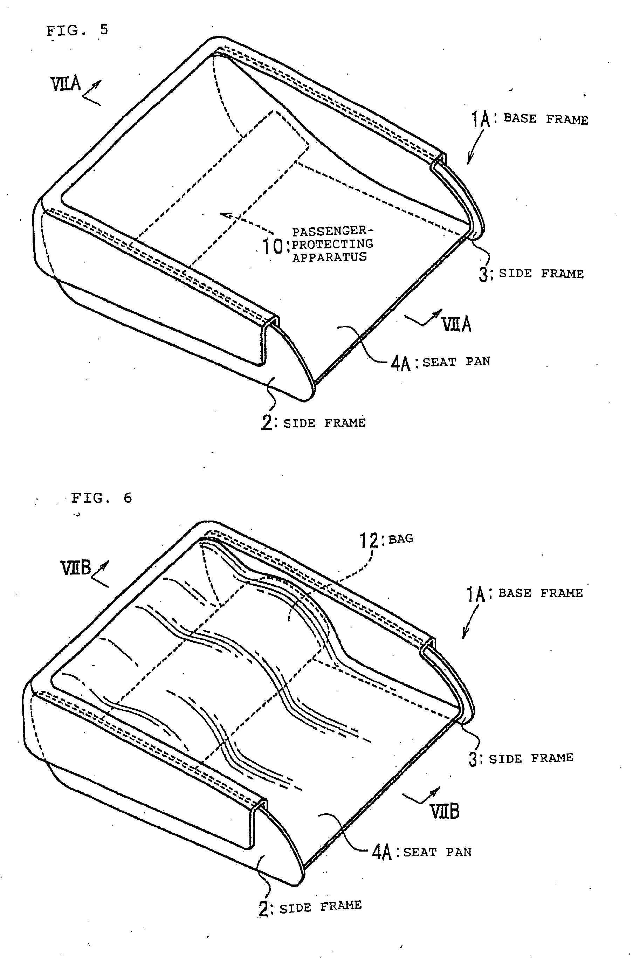

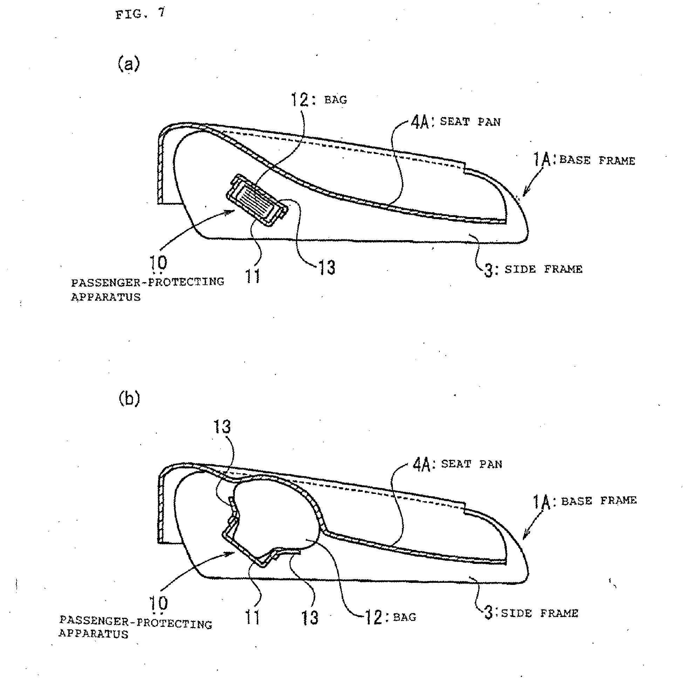

Figs. 5 and 6 are perspective views of a base frame of a seat including the passenger-protecting apparatus 10, according to another embodiment, and Figs. 7(a) and (b) are sectional views taken along lines VIIA-VIIA and VIIB-VIIB indicated in Fig. 6, respectively. Meanwhile, Fig. 5 and Fig. 7(a) illustrate the non-inflation state of the bag, and Fig. 6 and Fig. 7(b) illustrate the inflation state of the bag.

In the present embodiment, a base frame 1A of the seat includes a seat pan 4A continuously extending in the front-back direction from both front ends to both rear ends of the left and right side frames 2 and 3. In other words, in the present embodiment, a seat cushion (not shown) is supported by a single sheet of the seat pan 4A from its front to rear ends. The seat pan 4A has the passenger-protecting apparatus 10 disposed under the front part thereof.

In the present embodiment, when the bag 12 is inflated, the front part of the seat pan 4A is pressed from below by the bag 12 and subjected to a plastic deformation like forming an upward convex curve as shown in Figs. 6 and 7(b), thereby pressing the front part of the seat cushion upwards. Meanwhile, the foregoing predetermined deformation area, deformed upwards like forming a convex curve, may be made thinner than its circumferential section or have a mesh or porous structure so as to accelerate the deformation.

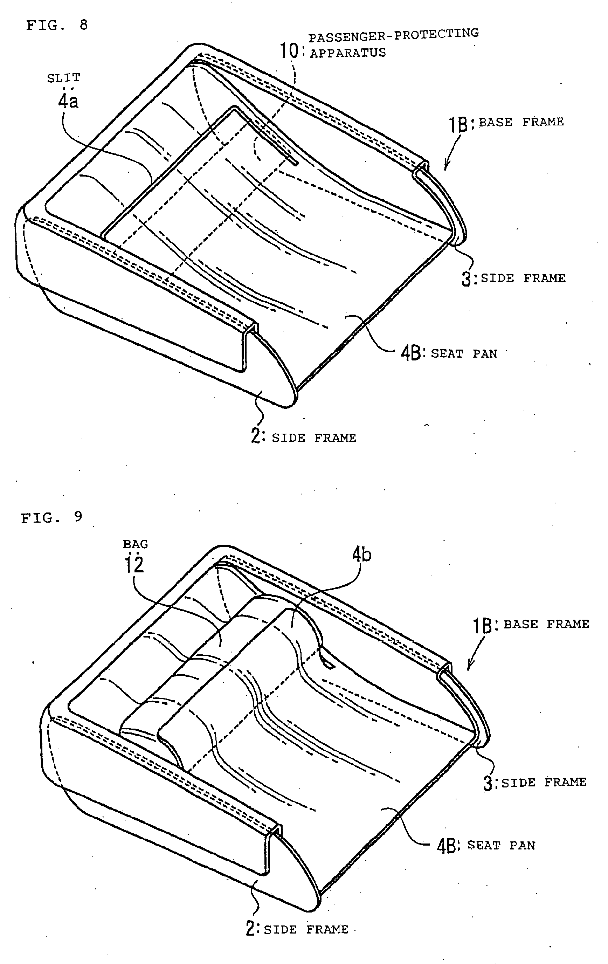

Figs. 8 and 9 are perspective views of a base frame 1B of a seat including the passenger-protecting apparatus 10, according to another embodiment. Meanwhile, Fig. 8 illustrates the non-inflation state of the bag and Fig. 9 illustrates the inflation state of the bag.

In the present embodiment too, a supporting member supporting a seat cushion (not shown) from its front to rear ends is formed from a single sheet of a seat pan 4B, which has the passenger-protecting apparatus 10 disposed under the front part thereof. As shown in Fig. 8, in the present embodiment, a slit 4a serving as deformation-accelerating means extends along the periphery of a predetermined deformation area, deformed when pressed from below by the inflated bag 12, of the front part of the seat pan 4B. While the slit has a C-shape so as to surround three sides of the front and the left and right sides of the predetermined deformation area in the present embodiment, it may surround three sides of the rear and the left and right sides. Also, the predetermined deformation area may have slits along two sides along the front and rear ends thereof, or the predetermined deformation area may have slits along the left and right sides thereof.

In the present embodiment, as shown in Fig. 9, when the bag 12 is inflated, the bag 12 presses the area of the seat pan 4B surrounded by the slit 4a from below. Accordingly the area opens out upwards like forming a flap (4b) shape so as to press the seat cushion upwards. The upward opening out of the flap 4b is smoothly and quickly achieved.

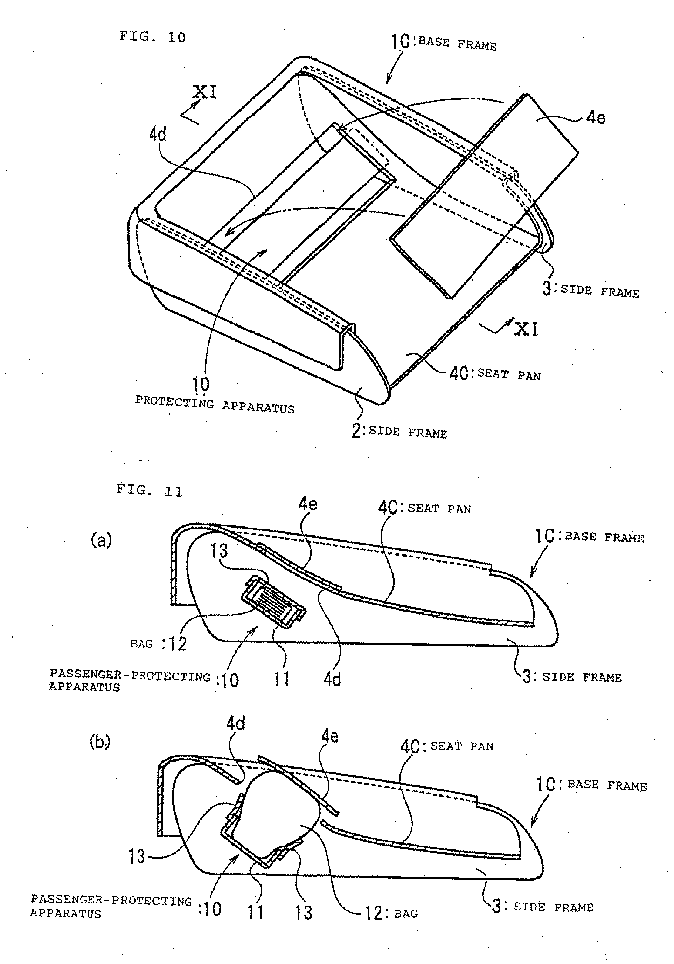

Fig. 10 is an exploded perspective view of a base frame 1C of a seat including the passenger-protecting apparatus 10, according to another embodiment, and Figs. 11(a) and (b) are sectional views of the base frame 1C taken along line XI-XI indicated in Fig. 10, respectively, in the inflation and non-inflation states of the bag.

In the present embodiment too, a supporting member supporting a seat cushion (not shown) from its front to rear ends is formed from a single sheet of a seat pan 4C, which has the passenger-protecting apparatus 10 disposed under the front part thereof. In the present embodiment, the seat pan 4C has an opening 4d arranged at the front part thereof, allowing the inflated bag 12 to pass therethrough towards the seat cushion. A plate 4e is arranged so as to cover the opening 4d.

The plate 4e is overlaid on the opening 4d from the side of the seat cushion, and its periphery is retained with or lightly connected to the periphery of the opening 4d. When the bag 12 is inflated, the plate 4e is detached from the seat pan 4C while being pushed by the bag 12 and moves upwards. As means for retaining or lightly connecting the plate 4e with or to the seat pan 4C, while a flat fastener such as a magic tape (registered trade mark), bonding with an adhesive or a double-side tape, riveting with a low strength, fitting with a low strength, spot-welding with a low strength, and the like are listed by way of example, the means is not limited to the above ones. While the plate 4e preferably covers the overall opening 4d, it may cover a part of the opening 4d. The overall or a part of the plate 4e may have a hole or a slit perforated therein.

In the present embodiment, when the bag 12 is inflated, the bag 12 passes through the opening 4d while pushing up the plate 4e and presses the seat cushion lying above the seat pan 4C. Hence, the front part of the seat cushion is quickly pushed up or made hard by the bag 12.

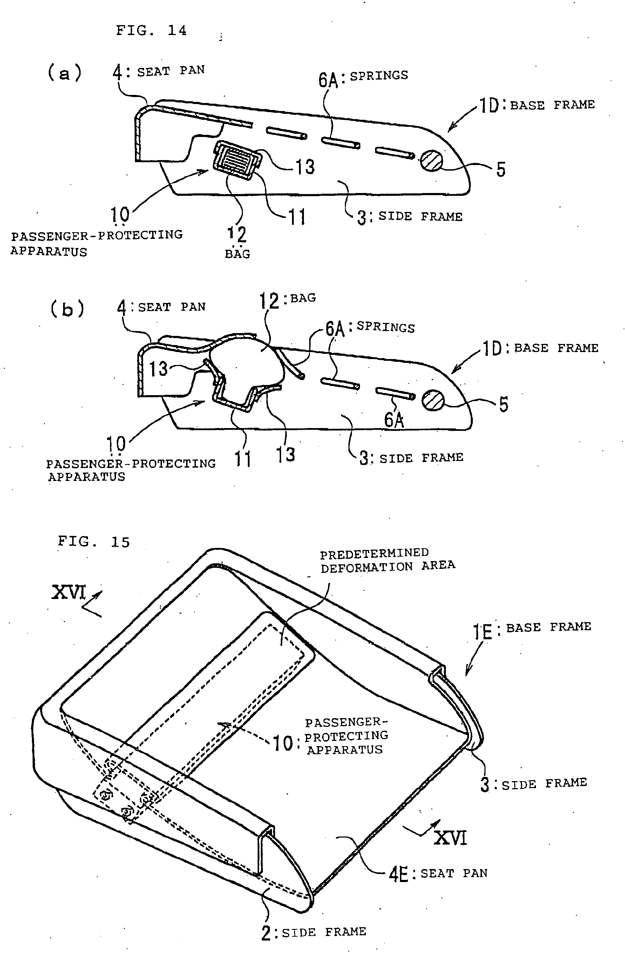

While the base frame 1 shown in Figs. 1 to 3 has the seat springs 6 stretched over in the front-rear direction of the seat, the seat springs 6 may be stretched over in the left-right direction of the seat. Fig. 13 is a perspective view of a base frame ID having the above-described structure, and Fig. 14 illustrates sectional views taken along line XIV-XIV indicated in Fig. 13. Meanwhile, Fig. 14(a) illustrates the non-inflation state of the bag and Fig. 14(b) illustrates the inflation state of the bag.

The base frame 1D has the same structure as that of the foregoing base frame 1 shown in Figs. 1 to 3, except that the left and right side frames 2 and 3 have seat springs 6A stretched over therebetween, and the same reference characters in Figs. 13 and 14 as those in Figs. 1 to 3 represent the same parts. Meanwhile, Each spring 6A extends in the left-right direction while snaking its way back and forth like drawing a letter S and both ends thereof respectively connected to the side frames 2 and 3.

With a positional relation of being located around between the rear end of the seat pan 4 and the spring 6A close to the seat pan 4, the passenger-protecting apparatus 10 is disposed under the seat pan 4 and the spring 6A.

In the present embodiment too, when the inflator of the passenger-protecting apparatus 10 discharges gas, the bag 12 is inflated and pushes the seat pan 4 and the spring 6A close to the seat pan 4 upwards as shown in Fig. 14(b). As a result, the front part of the seat cushion has a higher density because of being pushed up or pressed from below via the seat pan 4 and the springs 6A, thereby preventing or inhibiting the waist of a passenger from moving forwards.

Meanwhile, the springs 6A may be likewise formed such that the connection of both ends thereof to the side frames 2 and 3 is released when pushed upwards by the inflated bag 12. Also, the apparatus may be constructed such that the bag 12 inflates out towards the seat cushion while passing through between the rear end of the seat pan 4 and the spring 6A close to the seat pan 4 or between the mutually adjacent springs 6A.

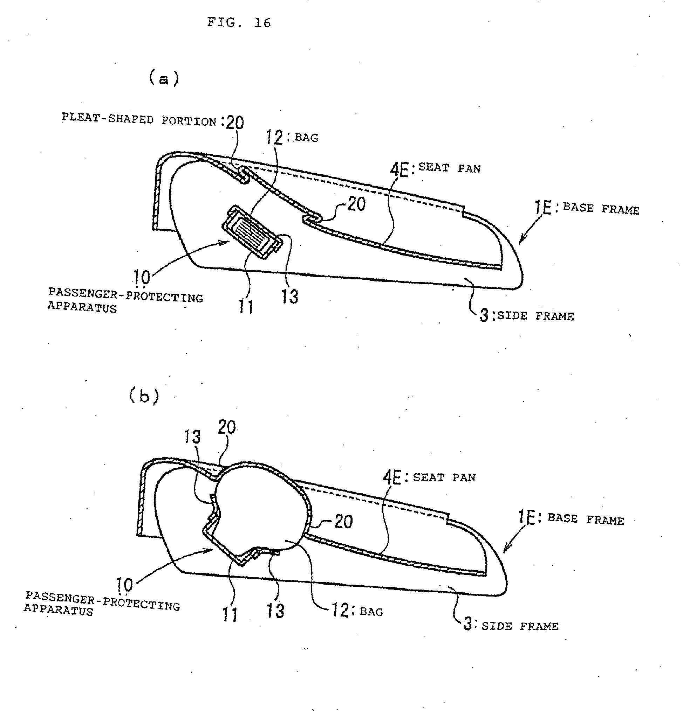

Fig. 15 is a perspective view of a base frame of a seat including the passenger-protecting apparatus 10, according to another embodiment, and Fig. 16 illustrates sectional views taken along line XVI-XVI indicated in Fig. 15. Meanwhile, Fig. 16(a) illustrates the non-inflation state of the bag and Fig. 16(b) illustrates the inflation state of the bag.

With a base frame 1E according to the present embodiment, a supporting member supporting a seat cushion (not shown) from its front to rear ends is formed from a single sheet of the seat pan 4E, which has the passenger-protecting apparatus 10 disposed under the front part thereof. As shown in Fig. 15, in the present embodiment, pleat-shaped portions 20 serving as deformation-accelerating means are formed along the periphery of a predetermined deformation area, deformed when pressed from below by the inflated bag 12, of the front part of the seat pan 4E.

As shown in Fig. 16(a), each pleat-shaped portion 20 is formed such that a section extending along the periphery of the predetermined deformation area (a section between the predetermined deformation area and a circumferential portions of the predetermined deformation area) of the seat pan 4E is folded back on the upper side of the circumferential portion like providing a slack to the section. Meanwhile, while being folded back only once in Fig. 16(a), the section may be folded back a plurality of times in a zigzag pattern.

In the present embodiment, while being respectively disposed along the front and rear ends of the predetermined deformation area as shown in the figure, the pleat-shaped portions 20 may be disposed along the left and right side ends of the predetermined deformation area. Also, the pleat-shaped portion may be disposed all around or partially around the predetermined deformation area.

In the present embodiment, when the bag 12 is inflated and presses the predetermined deformation area of the seat pan 4E from below, as shown in Figs. 16(a) and (b), the pleat-shaped portions 20 are deformed like extending upwards and accelerates the predetermined deformation area to bulge upwards. With this, the predetermined deformation area bulges upwards smoothly and quickly and early presses the seat cushion upwards.

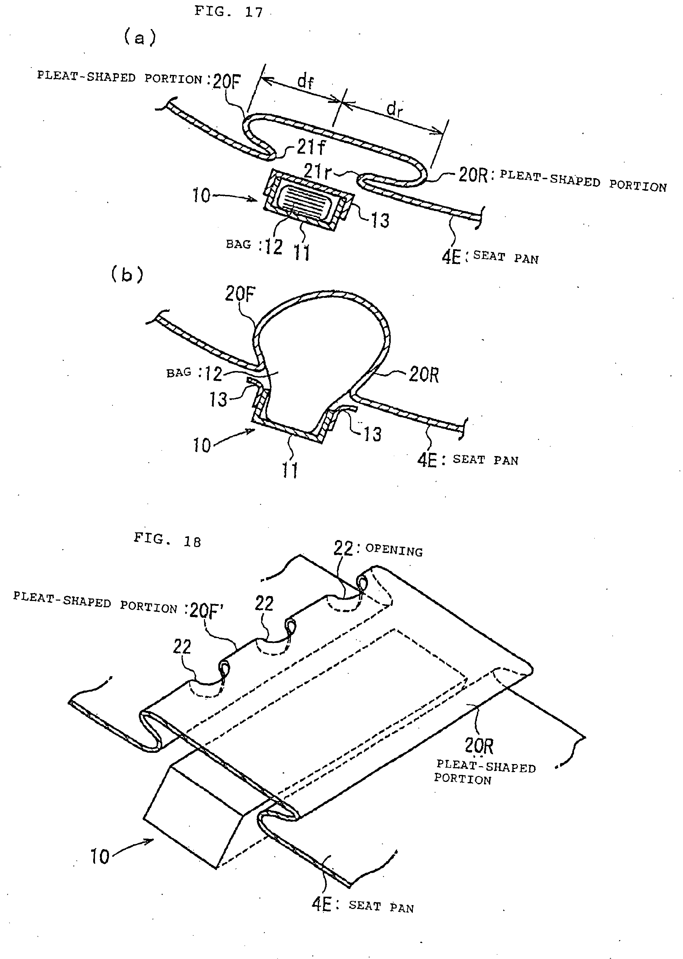

Meanwhile, by selecting the shape, the size, the arrangement, and so forth of the pleat-shaped portion 20 where appropriate, for example, the bulging shape, the bulging direction, and the bulging height of the predetermined deformation area from the upper surface of the seat pan 4E can be controlled. Fig. 17 shows sectional views of a major part of the seat pan 4E, illustrating example of pleat-shaped portions having the above-described structure. Meanwhile, Fig. 17(a) illustrates the non-inflation state of the bag and Fig. 17(b) illustrates the inflation state of the bag.

In the present embodiment too, the predetermined deformation area of the seat pan 4E has pleat-shaped portions 20F and 20R disposed along the front and rear ends thereof, respectively. As shown in Fig. 17(a), these pleat-shaped portions 20F and 20R are likewise formed such that respective sections between the front and rear ends of the predetermined deformation area and the circumferential portions of the predetermined deformation area are folded back once on the upper sides of the circumferential portions.

With a positional relation in which a middle position in the front-back direction, of the base end of the bag 12 substantially coincides with a middle position in the front-back direction, between base ends (folded back portions serving as boundaries between the pleat-shaped portions 20F and 20R and the corresponding circumferential portions) 21f and 21r of the pleat-shaped portions 20F and 20R, the passenger-protecting apparatus 10 is disposed under the predetermined deformation area.

In the present embodiment, a distance dr from the middle position in the front-back direction, of the base end of the bag 12 (hereinafter, simply referred to as middle position) to the rear end of the rear pleat-shaped portion 20R is greater than a distance df from the middle position to the front end of the front pleat-shaped portion 20F. That is, a folded amount of the rear pleat-shaped portion 20R onto the upper surface of the seat pan 4E is greater than a folded amount of the front pleat-shaped portion 20F onto the seat pan 4E.

With the above-described structure, when the bag 12 is inflated and presses the predetermined deformation area from below, the rear pleat-shaped portion 20R extends out upwards on a larger scale than the front pleat-shaped portion 20F. As a result, as shown in Fig. 17(b), the predetermined deformation area bulges out in a slanting rear-upward direction, that is, in a direction coming closer to the waist of a sitting passenger.

Meanwhile, the bulging shape and the others from the upper surface of the predetermined deformation area of the seat pan 4E can be likewise controlled by adjusting the stiffness of the pleat-shaped portions by providing openings such as slits or thin wall portions, or ribs or thick wall portions to the pleat-shaped portions. Fig. 18 is a perspective view illustrating example of pleat-shaped portions having the above-described structure.

In the present embodiment too, the predetermined deformation area of the seat pan 4E has a pleat-shaped portion 20F' and the pleat-shaped portion 20R disposed along the front and rear ends thereof, respectively. In the present embodiment, the front pleat-shaped portion 20F' has a plurality of small bore-shaped openings 22 bored therein. With this arrangement, the stiffness of the pleat-shaped portion 20F' is smaller than that of the rear pleat-shaped portion 20R.

Accordingly, when the bag 12 is inflated and presses the predetermined deformation area from below, the pleat-shaped portion 20F' extends more quickly and on a larger scale than the pleat-shaped portion 20R, so that the predetermined deformation area bulges out upwards while inclining rearwards so as to oppose to the forward movement of the sitting passenger.

Any of the foregoing embodiments is merely an example of the present invention, and the present invention is not limited to the embodiments shown in the figures. For example, while the retainer 11 of the passenger-protecting apparatus 10 is supported with the left and right side frames in each of the foregoing embodiments, the retainer 11 may be directly fixed to the lower surface of the supporting member including the seat pan. With this structure, the distance between the passenger-protecting apparatus 10 and the waist of a seat-occupying person is small, whereby the inflated bag quickly constrains the movement of the waist of the passenger.

## Claims

1. A passenger-protecting apparatus, comprising:
a bag which is disposed under the front part of a supporting member supporting a seat cushion and which is inflatable so as to push up the supporting member from below; and
an inflator inflating the bag at the time of a car emergency,
wherein the front part of the seat cushion is pressed from below when the front part of the supporting member is pushed up by the inflated bag.

2. The passenger-protecting apparatus according to Claim 1, wherein the supporting member is a seat pan and seat springs, and when the bag is inflated, the seat pan and the seat springs are pushed upwards.

3. The passenger-protecting apparatus according to Claim 1 or 2, wherein the supporting member is seat springs connected to a seat pan and extending in the front-back direction, and
wherein, when the bag is inflated, the connection between the front ends of the seat springs and the seat pan is released and the front parts of the seat springs are pushed upwards.

4. The passenger-protecting apparatus according to Claim 1, wherein the supporting member is seat springs extending in the left-right direction and having both ends thereof connected to the frame section of a seat, and
wherein, when the bag is inflated, the connection between both ends of the seat springs and the frame section is released and the seat springs are pushed upwards.

5. The passenger-protecting apparatus according to Claim 1, wherein the supporting member is a seat pan,
wherein the seat pan is pushed upward while being deformed when the bag is inflated.

6. The passenger-protecting apparatus according to any one of claims 2, 3 or 5, wherein the seat pan has deformation-accelerating means provided therein for accelerating the upward deformation thereof.

7. The passenger-protecting apparatus according to Claim 6, wherein the deformation-accelerating means is a slit disposed along the periphery of a predetermined deformation area of the seat pan.

8. The passenger-protecting apparatus according to Claim 6, wherein the deformation-accelerating means is a pleat-shaped portion disposed along the periphery of the predetermined deformation area of the seat pan.

9. The passenger-protecting apparatus according to Claim 1, wherein the supporting member is a seat pan,
wherein the seat pan has an opening perforated therein above the bag, for allowing the inflated bag to pass upwards therethrough, and a plate disposed thereon so as to cover the opening, and
wherein the plate is pushed upwards when the bag is inflated.
